Europäisches Patentamt

(19) European Patent Office

Office européen des brevets

(11) Publication number: **0 121 973**
**B1**

(12) **EUROPEAN PATENT SPECIFICATION**

(45) Date of publication of patent specification: **15.07.87**

(51) Int. Cl.⁴: **A 01 K 13/00**

(21) Application number: **84200374.1**

(22) Date of filing: **13.03.84**

(54) **Teat and udder support for dairy cows.**

(30) Priority: **15.03.83 NL 8300932**

(43) Date of publication of application:
**17.10.84 Bulletin 84/42**

(45) Publication of the grant of the patent:
**15.07.87 Bulletin 87/29**

(84) Designated Contracting States:
**AT BE CH DE FR GB IT LI LU NL SE**

(56) References cited:
**DE-A-1 782 214**
**FR-A- 331 561**
**US-A-3 839 845**

(73) Proprietor: **ALFA-LAVAL AGRI B.V.**
**Bornholmstraat 46**
**NL-9723 AZ Groningen (NL)**

(72) Inventor: **Detmers, Herman**
**Middendorp 20**
**NL-7761 PP Schoonebeek (NL)**

(74) Representative: **van der Beek, George Frans**
**et al**
**Nederlandsch Octrooibureau Johan de Wittlaan**
**15 P.O. Box 29720**
**NL-2502 LS 's-Gravenhage (NL)**

Courier Press, Leamington Spa, England.

### Description

The invention relates to a teat- and udder support for dairy cows comprising a protector of meshwork material, the protector being destined to be positioned against the udder and the teats, and a bandage connected to the protector and destined to hold the protector in position under the cow.

Such a teat-and udder support is known from NL—A—125,773, DE—A—1782214. Here the protector comprises wide-gauge material that is not or substantially not elastic and which as a preshaped cup is positioned against the udder.

This cup closely fits to the udder when this is filled with milk but not after milking when the udder is much smaller. In the latter case the teats suspend freely in the cup.

A lot of dairy cows have leaking teats as a result of the fact that the sphincter has been previously damaged by treading. In consequence of this the milk may run out of the udder in the period between milking times and the cup may be soiled with milk. Moreover, this means loss of milk and requires slaughtering of the cow.

Further the fairly rigid cup even increases the chance of damaging the sphincter, because of the fact that the fairly rigid yarns of the wide-gauge material act like knives on the teats, certainly if the cow lies down or is trodden.

A further disadvantage of this fairly rigid cup is, that different dimensions and measures have to be used to obtain at least an adaption to the shape in case the udder is filled. With an empty or half-empty udder there is always free space present between cup and udder with all the disadvantages thereof.

Moreover, during milkng the cup has to be removed from the udder by disconnecting the connections with the bandage comprising leather strappings to get admission to the teats.

In order to obtain a correct fitting in practice the strappings of the bandage are pulled very strongly with as result the development of abraded spots on the skin of the cow. This causes discomfort to the cow and results in a lower food intake and so a lower production of milk.

The invention aims to avoid the disadvantages of the known device and this is obtained by the fact that the protector consists of a very elastic textile sheet material destined to be tensioned about the udder and the teats. With very elastic is meant elastic like rubber.

A textile material is used which can be compared with elastic dressings. It is self-evident that the material used for the support according to the invention has to stand-up against lactic acid, against disinfectants, that are used to clean the teats before milking and against stale and dung, so that the material has to be formed out of special raw materials.

By the use of a very elastic material the tensioned protector always fits strongly against the udder and the teats, both in full as well as in empty condition of the udder. The teats in that case are bent against the udder so that also in the case where a teat is leaking no loss of milk occurs.

Preferably the protector consists of a very elastic knitted material. By the application of the knitting technique a product may be obtained that is very elastic in all directions.

By preferably using tube-shaped very elastic knitted material a double-walled flat product is formed.

Preferably the bands form a knitted unit with the protector, so these are also very elastic. However, it is also possible to use separate very elastic bands, which are fixed to or passed through the protector.

When milking the cow the protector easily can be pushed aside without loosening buckles and such.

Since it is elastic the meshwork material of the protector expands and contracts a number of times per day so that caked soil-dust that has become hard is removed by breaking loose.

The bandage has to fit as conveniently as possible about the cow in which strong bends have to be avoided as much as possible and it also has to be avoided that other cows with their legs hook behind the bands, for instance in case the cows cover each other. By the high elasticity of the bandage the complete support fits everywhere.

The invention will be further elucidated with the aid of the drawing, in which an example is shown.

Fig. 1 and 2 show a lower view and a side view respectively of the protector of the teat- and udder support according to the invention in its tensioned state.

Fig. 3 is a schematical top view of a cow, provided with such a support and

Fig. 4 shows a side view of the rear end of a cow provided with such a support.

The support according to the invention comprises a very elastic, meshwork textile sheet material preferably obtained by knitting techniques. The yarn material from which the support is knitted, not only has to be very elastic, but moreover has to resist lactic acid, disinfectants, that are used to clean the udder and the teats before milking and aggressive materials, that are present in dung and stale.

Such yarn material can be obtained commercially or has to be specially made.

Although the protector 1, that during use is present about the udder and the teats, has to be very elastic it is preferred to form also the bands 2, 3, 4 and 5 also from very elastical material.

These bands can in that case be provided as a unit with the protector by knitting.

It is preferred that the protector 1 and the bands 2—5 are knitted as a tube.

During use the protector 1 and its bands 2—5 are double- walled so that no chance is present of them unravelling.

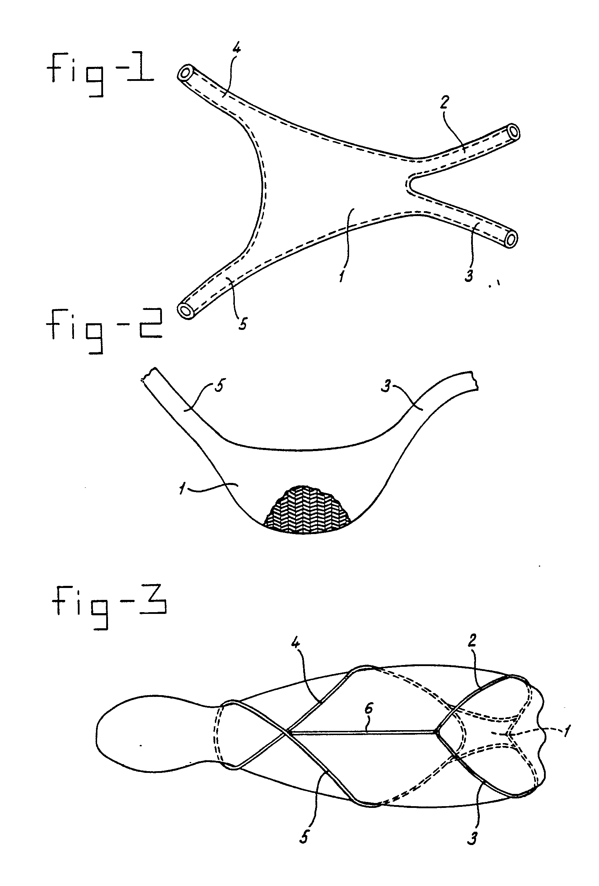

As appears from Fig. 1 and 3 the protector 1 in the tensioned state is smaller at its rear end than at its front end. The flat tube here is shaped as a trapezium with the bands 2—5 connected to the corners.

These bands may have a much greater length than shown. In practice a plurality of mutually connected elastic band parts can be used.

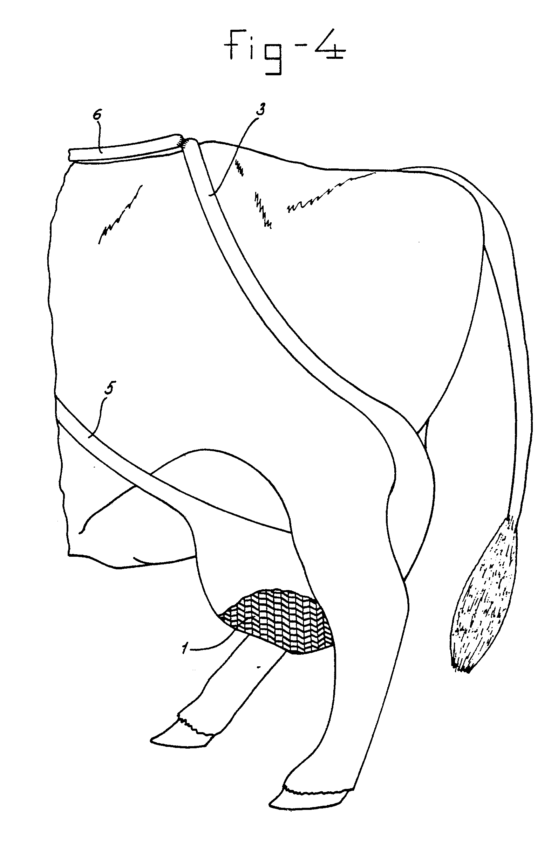

In Fig. 3 and 4 a possibility is shown for the leading of the bands about the cow in which an auxiliary string 6 is used. This is only one possibility.

It is important that the protector 1 fits the udders both in their full condition and in their empty condition in which the teats are flatly pressed aganst the udder. By this, loss of milk and soiling of the protector by milk is avoided, also in the case that the milk seal in the teat no longer functions.

Due to the elasticity and the softness of the bands no damaging of the skin occurs which otherwise should result in an uncomfortable feeling for the cow and so in a lower feed intake and thus a lower milk production. It is self-evident that preferably at some place adjustable connections are present.

With the positioning of the bandage as shown strong bends are avoided, while the hind-quarter at the upper side does not have bands. This is important for covering cows, for otherwise the front legs of the covering cow could be hooked behind the bands.

The support always remains fixed at its place, also in the case that the cow lies down.

Since the protector and the bands comprise a meshwork textile material a good ventilation is guaranteed.

Due to the high elasticity of the material of the protector and the bands the teats can be easily freed before milking from the protector without loosening connections such as buckles.

Possibly it can be considered to provide the protector at the position of the teats with small valves that, after milking can be closed again with "velcro"-tape (Trade Mark) or such. This embodiment is not shown.

It is not necessary to perform the bands as a unit with the protector, but they also can be connected thereto with "velcro"-tape (Trade Mark), hooks, buckles or such connections or are stitched thereto.

It is also possible to form the protector from a very elastic flat tube and to extend the elastic bandage freely therethrough. Both bands are then lying in a tensioned position aganst both longitudinal edges of the flat tube.

The protector also may comprise two flat tubes that are connected to each other along two adjacent side edges. The bands in this case may form the extension of these smaller flat tubes, are connected thereto or extend freely thereto.

The protector and/or the bands can be formed on a circular knitting machine or a flat fitting machine.

By periodically taking during knitting of the strings another colour for the weft yarns coloured cross paths are formed and axial tension changes can be remarked visually by the changing distance between the coloured cross paths. These axial changes of the tension can be removed by displacing the strings. By tensioning some bands stronger or looser, the level of the tension can be adapted.

In case a dairy cattle farmer has already other bandages, it is eventually possible to connect the protector thereto.

**Claims**

1. Teat- and udder support for dairy cows, comprising a protector of meshwork material, the protector being destined to be positioned against the udder and the teats, and a bandage connected to the protector and destined to hold the protector in position under the cow, characterized in that the protector consists of a very elastic textile sheet material, destined to be tensioned on the udder and the teats.

2. Teat- and udder support according to claim 1, characterized in that the protector consists of a knitted material.

3. Teat- and udder support according to claim 1 or 2, characterized in that the protector consists of a tube- shaped knitted material.

4. Teat- or udder support according to one or more of the preceding claims, characterized in that the bandage comprises bands each consisting of very elastic material connected to the protector.

5. Teat- and udder support according to claim 4, characterized in that the bands each consist of a knitted material.

6. Teat- and udder support according to claim 5, characterized in that the bands are each tube-shaped.

7. Teat- and udder support according to claims 5 or 6, characterized in that in the knitting of the bands coloured weft yarns are used.

**Patentansprüche**

1. Zitzen- und Euterhalter für Milchkühe mit einem Schutz aus netzartigem Material, der an Zitzen und Euter angelegt wird, und mit einer mit dem Schutz verbundenen Bandage, die den Schutz in seiner Lage unter der Kuh hält, dadurch gekennzeichnet, daß der Schutz aus einem hochelastischen Gewebebahnmaterial besteht, das über Zitzen und Euter gespannt wird.

2. Zitzen- und Euterhalter nach Anspruch 1, dadurch gekennzeichnet, daß der Schutz aus einem gestrickten Material besteht.

3. Zitzen- und Euterhalter nach Anspruch 1 oder 2, dadurch gekennzeichnet, daß der Schutz aus einem schlauchförmigen, gestrickten Material besteht.

4. Zitzen- oder Euterhalter nach einem oder mehreren der vorhergehenden Ansprüche, dadurch gekennzeichnet, daß die Bandage Bänder aufweist, die jeweils aus einem hochelastischen, mit dem Schutz verbundenen Material bestehen.

5. Zitzen- und Euterhalter nach Anspruch 4, dadurch gekennzeichnet, daß die Bänder jeweils aus einem gestrickten Material bestehen.

6. Zitzen- und Euterhalter nach Anspruch 5, dadurch gekennzeichnet, daß die Bänder jeweils schlauchförmig sind.

7. Zitzen- und Euterhalter nach Anspruch 5 oder 6, dadurch gekennzeichnet, daß zum Stricken der Bänder farbige Einschußfäden verwendet werden.

**Revendications**

1. Soutien pour trayons et pis de vaches laitières, comprenant une protection en matériau à mailles ajourées, la protection étant destinée à être placée contre le pis et les trayons, et un bandage relié à la protection et destiné à maintenir la protection en position sous la vache, caractérisé en ce que la protection consiste en un matériau en feuille textile très élastique destiné à être tendu sur le pis et les trayons.

2. Soutien pour trayons et pis selon la revendication 1, caractérisé en ce que la protection consiste en un matériau tricoté.

3. Soutien pour trayons et pis selon la revendication 1 ou 2, caractérisé en ce que la protection consiste en un matériau tricoté en forme de tube.

4. Soutien pour trayons et pis selon l'une ou plusieurs des revendications précédentes, caractérisé en ce que le bandage comprend des bandes, qui sont chacune constituées de matériau trés élastique, reliées à la protection.

5. Soutien pour trayons et pis selon la revendication 4, caractérisé en ce que les bandes sont chacune constituées de matériau tricoté.

6. Soutien pour trayons et pis selon la revendication 5, caractérisé en ce que les bandes sont chacune en forme de tube.

7. Soutien pour trayons et pis selon la revendication 5 ou la revendication 6, caractérisé en ce que l'on utilise des fils de trame colorés pour le tricotage des bandes.

fig-1

fig-2

fig-3

0 121 973

Fig-4

2